# EUROPEAN PATENT SPECIFICATION

(11) **EP 4 631 695 B1**
(45) Date of publication and mention of the grant of the patent: **13.05.2026**
(21) Application number: 24425013.0
(22) Date of filing: 09.04.2024
(51) Int. Cl.: B29C 48/27, B29C 48/69, B29C 48/255, B01D 29/01, B01D 29/64, B01D 29/92, B01D 33/048, B01D 33/80

(54) **FILTRATION SYSTEM PROVIDED WITH AN IMPROVED DISCHARGE SYSTEM**
FILTERSYSTEM MIT VERBESSERTEM ENTLEERUNGSSYSTEM
SYSTÈME DE FILTRATION POURVU D'UN SYSTÈME D'ÉVACUATION AMÉLIORÉ

(43) Date of publication of application: 15.10.2025
(73) Proprietor: FIMIC SRL, 35010 Carmignano di Brenta (PD) (IT)
(72) Inventor: CANAIA, Erica, 35010 Carmignano di Brenta (PD) (IT)
(74) Representative: Botti & Ferrari S.p.A.

(56) References cited:
- WO-A1-2023/012656
- AT-B- 410 759
- CN-A- 107 791 488
- CN-A- 116 277 869
- US-A1- 2014 224 749
- US-B2- 11 103 812
- US-B2- 7 824 544

## Description

### Field of application

The present invention relates to a filtration system for molten plastic material. The following description relates to this field of application with the only purpose of simplifying the exposition thereof.

### Prior art

As it is known, it is very important to recycle a plastic material for the subsequent reuse thereof. To this end, the plastic material to be recycled is subjected to a melting process and a subsequent filtration step aimed at eliminating impurities therefrom.

Generally, to perform said filtration, there is provided a hollow cylindrical chamber provided with a filtering element thereinside, which is interposed between a feeding inlet for the raw plastic material to be filtered and an outlet downstream of said filtering element for the outflow of the filtered molten plastic material. The molten material, coming from an extruder and suitably heated until it becomes fluid, is then forced to pass through the aforementioned filtering element (for instance in the shape of a disk or a perforated plate) that filters the impurities contained in the material, which thus stop upstream of the disc or perforated plate, while downstream thereof the clean material to be recycled is obtained.

There is also a scraper for collecting the impurities accumulated on the filter element. Particularly, after a few rotation revolutions of the scraper, the collected impurities must be expelled out of the machine. To this end, it is envisaged to open an outlet duct for discharging the collected impurities which is different from the outlet duct of the filtered material.

According to some known solutions, a scraper equipped with two collection chambers is used, both collection chambers being in communication with a central discharge channel arranged between said chambers; for instance, the scraper may be "V"-shaped in which the central discharge channel is at the vertex of the V. Particularly, while the scraper rotates, the impurities accumulate in the two collection chambers, until a valve opens from where they flow out passing through the aforementioned single central channel which extends along the rotation axis of the scraper. This solution is not free from drawbacks since, especially in large filtration systems, there is insufficient and inefficient discharge, in particular as regards the peripheral areas of the disc or plate.

WO 2023/012656, CN 107791488, AT 410759, US 7,824,544, US 2014/0224749, CN 116277869, and US 11,103,812 disclose filtration systems comprising a scraper for removing the impurities from the filter and a discharge opening.

The technical problem of the present invention is to provide a filtration system having structural and functional features such as to allow overcoming the limitations and drawbacks which still affect the known solutions, in particular a filtration system which allows an effective discharge process of the impurities accumulated on the filter.

### Summary

The solution idea underlying the present invention is to provide a filtration system in which the discharge opening, provided with a suitable valve, is formed on the side surface of the hollow body inside which the filtering filter is arranged. Therefore, a discharge opening is provided, which is directly formed in the hollow body (in particular formed in the side wall thereof) and which is set in direct communication with the outlet opening of the scraper so that, when the latter is brought in communication with the discharge opening of the system during the expulsion of the impurities, said discharge opening develops in the same longitudinal development direction of the scraper. Particularly, in case of a cylindrical-shaped hollow body, the discharge opening is arranged in radial direction with respect to the symmetry axis of the cylinder. Moreover, a suitable scraper is provided which, in a preferred embodiment, is equipped with collection chambers having a substantially constant shape along the longitudinal axis thereof and each having an own discharge outlet along said longitudinal axis (in particular arranged orthogonally to the rotation axis).

Based on this solution idea, according to the invention the above technical problem is solved by a filtration system for plastic materials comprising a hollow body comprising a side wall, at least one inlet for a molten plastic material to be filtered and at least one outlet for the outflow of the filtered molten plastic material, a filtering element arranged in the hollow body between the inlet and the outlet and surrounded by the side wall, said filtering element being configured to be passed through by the molten plastic material along a filtering direction, thus filtering impurities from said molten plastic material, at least one scraper configured to rotate at a surface of the filtering element about a rotation axis and to collect the impurities accumulated on said surface of said filtering element, and a discharge system adapted to allow the outflow of the impurities collected by the scraper, characterized in that the discharge system comprises at least one discharge through-opening formed on the side wall of the hollow body. The scraper comprises a body having at least one scraping portion and at least one collection chamber in the shape of a cavity in said body and configured to store the impurities collected during the rotation and conveyed thereinto by the scraping portion. The filtration system is configured so that, during the rotation of the scraper, an outlet opening thereof is in fluid communication with the discharge opening for a certain period of time, without limitation on duration. The outlet opening of the scraper is located at an end portion thereof which is furthest away from the rotation axis and is configured to allow the outflow of the impurities along said longitudinal axis.

More particularly, the invention comprises the following additional and optional features, taken singularly or in combination if necessary. Said additional and optional features are illustrated for instance in the dependent claims.

According to an aspect of the present invention, the scraper may comprise at least one pair of collection chambers that are separated and arranged orthogonally (possibly symmetrically) with respect to the rotation axis of said scraper.

According to an aspect of the present invention, the at least one collection chamber of the scraper may have a diameter, meant as maximum transversal dimension, not greater than 100 mm, preferably comprised between 50 mm and 70 mm, even more preferably 60 mm.

According to an aspect of the present invention, the section of the at least one collection chamber may be circular or not, not necessarily even if preferably constant, with an area not exceeding an equal circular section with diameter not greater than 100 mm.

According to an aspect of the present invention, the discharge system may comprise at least one valve system arranged at the discharge opening and configured to adjust the outflow of the impurities from said discharge opening.

According to an aspect of the present invention, the valve system may be configured so as to allow, when the impurities are expelled through the discharge opening, a discharge in a direction that is substantially coincident with that of the discharge opening and/or in a direction that is substantially orthogonal thereto.

According to an aspect of the present invention, the valve system may comprise a valve body and a movable element inside said valve body and configured to open and close the discharge opening.

According to an aspect of the present invention, the system may comprise a control unit configured to control the rotation of the scraper.

Particularly, the control unit may be configured to open the valve system based on a certain rotation time of the scraper or based on a certain number of revolutions of said scraper (in an equivalent view).

According to an aspect of the present invention, the filtering element may comprise a disc comprising a plurality of filtering holes, for instance with a diameter of 50 µm to 500 µm.

According to an aspect of the present invention, the hollow body may extend along a symmetry axis.

According to an aspect of the present invention, the discharge opening may extend at least along a diameter of said hollow body, said diameter being in particular intended along a direction that is orthogonal to said symmetry axis.

According to an aspect of the present invention, the hollow body may be cylindrical-shaped.

According to an aspect of the present invention, the discharge opening may be arranged in radial direction with respect to the symmetry axis of said cylindrical-shaped hollow body.

According to an aspect of the present invention, the inlet and outlet for the molten plastic material may be formed on the side wall of the hollow body.

According to an aspect of the present invention, the hollow body may comprise a bottom wall, wherein the side wall extends from said bottom wall, and a mouth opposite the bottom wall and associable with a closing cover.

The features and advantages of the filtration system according to the invention will become clearer from the following description of an embodiment thereof given by way of non-limiting example with reference to the appended drawings.

### Brief description of the drawings

In these drawings:
- figure 1 is a view of a filtration system according to embodiments of the present invention;
- figure 2 is a sectional detail of the filtration system according to embodiments of the present invention; and
- figure 3 is a view of a scraper according to the present invention.

### Detailed description

With reference to these figures, reference number 100 globally and schematically indicates a filtration system for plastic materials made according to the present invention.

It is worth noting that the figures represent schematic views and are not drawn on scale, instead they are drawn so as to enhance the important features of the invention. Moreover, in the figures, the various elements are represented schematically, their shape varying according to the desired application. Moreover, it is worth noting that, in the figures, identical reference numbers refer to elements that are identical in shape or function. Finally, particular expedients described in connection to an embodiment illustrated in a figure can also be used for the other embodiments illustrated in the other figures.

Clearly, some technical details of the invention may be replaced by other technically equivalent details without departing from the scope of the claimed invention, as it is well known to the person skilled in the art.

In the following description, relative terms such as "above", "below", "upward", "downward", "upper", "lower" are used referring to the illustrations of the solutions given in the figures only to simplify the exposition thereof.

Moreover, indications of particular geometries (circular, rectangular) or of the arrangement of the elements (parallel, orthogonal, contiguous), as well as the term "substantially" must always be intended in connection to physical and not geometrically abstract elements, and thus they must always take into account the tolerances introduced by the transition from a pure mathematical/geometric world to the real world.

It should then be noted that, unless expressly indicated, the process steps may also be reversed if necessary.

The filtration system 100 is thus adapted to filter molten plastic material for its subsequent recycling, while removing the impurities from said material.

It is noted that, in the context of the present invention, the term "filtration system" is used to indicate any type of system dedicated to filtering molten plastic material, without being limited by a particular structure, in addition to what has been claimed in the appended claims. Moreover, it is noted that, in the present description, the term "impurities" is also used as synonym of "contaminant" and more generally of "dirt" contained in the molten plastic material which is wished to be removed therefrom.

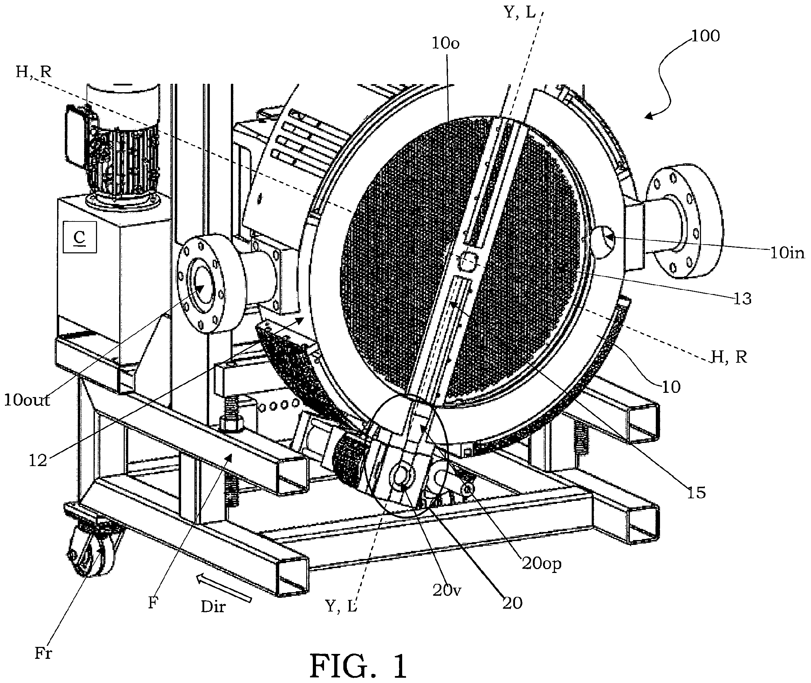

As illustrated in figure 1, the filtration system 100 first of all comprises a hollow body (indicated with reference number 10) that contains the main filtering components thereinside. The hollow body 10 first of all comprises a bottom wall 11 (or bottom portion) and a side wall 12 (or side portion) that extends from said bottom wall 11.

The hollow body 10 may be supported by a suitable support frame F provided with wheels Fr, though the present invention is not limited to a particular configuration and the drawings are provided only for illustrative and non-limiting purposes of the scope of the present invention.

In a preferred embodiment, the hollow body 10 is cylindrical-shaped (and thus the bottom wall 11 is at a base of the cylinder) though the present invention is not limited by a particular shape.

In the hollow body 10 at least one inlet 10in for the molten plastic material to be filtered and at least one outlet 10out for the outflow of the filtered molten plastic material are present. In an embodiment, the inlet 10in and the outlet 10out are formed at the side wall 12 of the hollow body 10 and are offset with respect to each other along the development axis of said side wall 12 (for instance the symmetry axis of the cylinder) so as to allow the correct path of the molten plastic material. Obviously, the present invention is in no way limited by a particular position of the inlet 10in and of the outlet 10out with respect to themselves and/or with respect to the side wall 12 and/or with respect to the bottom wall 11.

A filtering element is then present (reference number 13 hereinafter simply indicated as "filter"), which is arranged in the hollow body 10 between the inlet 10in and the outlet 10out and configured to be passed through by the molten plastic material along a filtering direction (indicated in the figures with the arrow Dir), thus filtering the impurities from said molten plastic material.

In an embodiment, the filter 13 is in the shape of a disc or plate comprising a plurality of filtering holes, for instance with a diameter of 50 µm to 500 µm, even if the present invention is not limited by a specific dimensional value (and thus an intermediate range such as for instance from 50 to 200 µm or from 50 to 300 µm is also possible), said holes retaining the dirt of the molten plastic material to be filtered.

In an embodiment, the filter 13 may be associated in support with a perforated support, which has the mere function of supporting said filter 13.

The filter 13 is thus surrounded by the side wall 12, which, in an embodiment, extends in a direction that is coincident with the filtering direction Dir.

In an embodiment, the hollow body 10 has a mouth (reference number 10o) opposite the bottom wall 11 and associable with a closing cover (not illustrated in the figures). The mouth 10o thus allows inserting and removing the filter 13 from the hollow body 10.

Moreover, the filtration system 100 comprises at least one scraper (reference number 15) configured to rotate at the inlet surface of the filter 13 about a rotation axis (reference R-R) and to collect, through said rotating movement, the impurities accumulated on said surface of the filter 13.

In order to allow expelling the impurities collected by the scraper 15, the filtration system 100 comprises a discharge system (wholly indicated with reference number 20) adapted to allow the outflow of said impurities, thus preventing the unwanted clogging of the system.

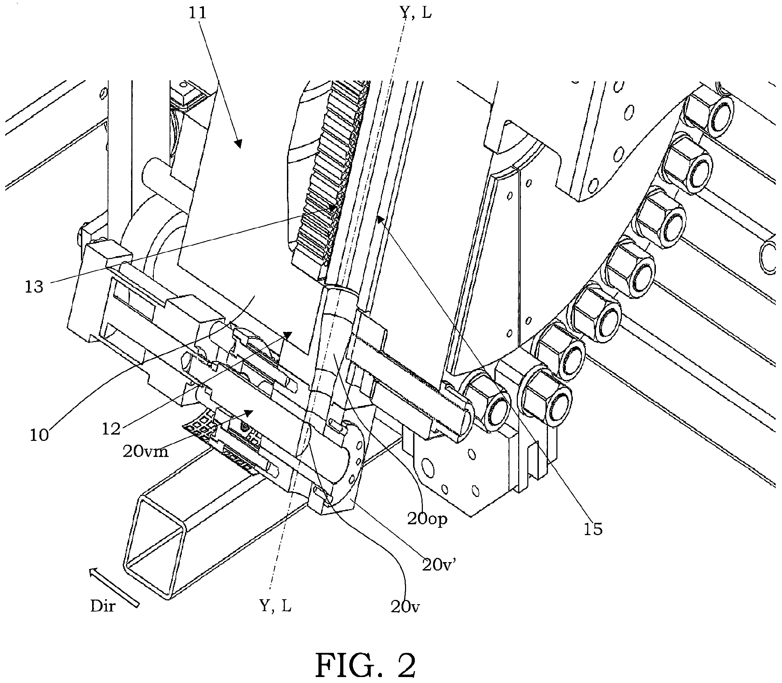

Particularly, advantageously according to the present invention, the discharge system 20 comprises at least one discharge opening or discharge outlet (indicated with reference number 20op) formed on the side wall 12 of the hollow body 10, and thus not along the rotation axis of the scraper 15 as it occurs in the known solutions; as it will be discussed hereinafter, this technical solution allows a much improved discharge. In this way, the discharge opening 20op is a through-opening directly formed in the hollow body 10 and develops in the same longitudinal development direction of the scraper 15, in particular along the diameter of the hollow body 10. Figure 2 presents a detail of the filtration system 100 with the aforementioned outlet opening 20op visible.

The hollow body 10 extends along an own symmetry axis (indicated in the figures with reference H-H) and the discharge opening 20op extends at least along the diameter (indicated with reference Y-Y) of said hollow body 10. It is noted that herein the term "diameter" is meant as a direction orthogonal to the symmetry axis H-H of the hollow body 10.

Referring to the configuration shown in the figures, in an embodiment the symmetry axis H-H of the hollow body 10 is parallel to the filtering direction Dir.

As previously mentioned, in a preferred embodiment, the hollow body 10 is cylindrical-shaped and the discharge opening 20op is thus arranged in radial direction with respect to the symmetry axis H-H of said cylindrical-shaped hollow body 10.

In an embodiment, the discharge opening 20op is tapered in shape, with a diameter that decreases passing from the inside of the hollow body 10 to the outside thereof.

Moreover, the discharge system 20 comprises a valve 20v (or valve system) arranged at the discharge opening 20op and configured to adjust the outflow of the impurities from said discharge opening 20op.

In an embodiment of the present invention, the vale 20v is shaped so as to allow discharging the impurities in a direction that is substantially coincident with that of the discharge opening 20op. Alternatively, the valve 20v is shaped so as to allow a discharge in a direction that is substantially orthogonal to the outlet direction of the discharge opening 20op. In other words, the valve 20v may be arranged so as to allow a perpendicular (as in the non-limiting example of figures 1 and 2) or linear discharge; this constructive choice may depend on the particular application and on the particular needs and is in no way limiting of the scope of the present invention.

In an embodiment, the valve 20v comprises a valve body 20v' and a movable element 20vm inside said valve body 20v' and configured to open and close the discharge opening 20op through its own movement, i.e. it is a cylinder-piston system actuatable for controlling the discharge.

The above discussed solution, with the discharge opening 20op arranged radially, is very advantageous since it allows an optimal discharge of the impurities collected by the scraper 15.

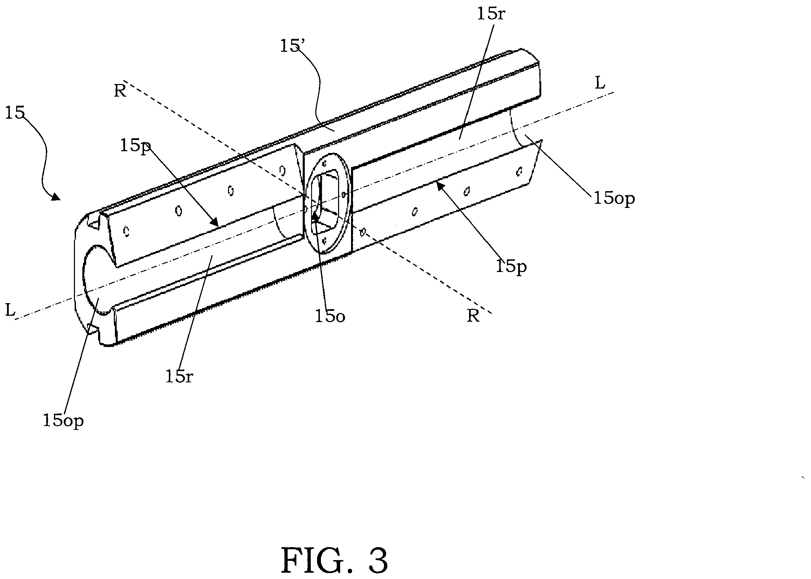

In an embodiment of the present invention illustrated in figure 3, the scraper 15 comprises a body 15' that has at least one collection chamber 15r (also indicated as "collection garage"), more preferably a pair of collection chambers 15r, possibly non-communicating with each other and configured to store the impurities collected during the rotation and conveyed thereinto through a respective scraping portion 15p (for instance blade-shaped) of said scraper 15.

In a non-limiting embodiment, the two collection chambers 15r are separated from each other at a central opening 15o, which is adapted to engage with a rotation shaft (not illustrated in the figures) to impart the desired rotational movement to the scraper 15. The two separated collection chambers 15r are arranged symmetrically with respect to the rotation axis R-R, which can coincide with the symmetry axis H-H of the hollow body 10.

In an implementing example, the scraping portion 15p is formed on the body 15' of the scraper 15 as a tilted portion which ends with a pointed portion configured to detect the impurities accumulated on the surface of the filter 13. In other words, the scraping portion 15p is shaped so as to have at an edge thereof, a cutting element configured to remove the impurities with which it comes into contact.

As illustrated in figure 3, each collection chamber 15r is in the shape of a cavity in the body 15' of the scraper 15, for instance a cylindrical cavity, even if the present invention is not limited by a specific configuration and/or shape.

In an embodiment, the collection chambers 15r have a diameter (meant as maximum transversal dimension) comprised between 50 mm and 70 mm, preferably of about 60 mm, and thus their volume is greater than the one that characterises the prior art scrapers.

According to an aspect of the present invention, the section of the at least one collection chamber may be circular, even if this is not strictly necessary, and, in case of non-circular section, said collection chamber may have a volume not greater than that of an equivalent circular-section chamber with a diameter not greater than 100 mm.

In a preferred embodiment, the collection chambers 15r have a constant shape along the longitudinal axis (indicated with reference L-L) of the scraper 15 (for instance, as above indicated, a constant cylindrical shape), even if the present invention is not limited thereto and other less preferred configurations are also not excluded, for instance with a non-constant shape and thus variable section.

In general, the shape of said collection chambers 15r is optimized to promote the accumulation, sliding and removal of the collected material.

As mentioned, the scraper 15 extends along its own longitudinal axis L-L, which is substantially orthogonal to the rotation axis R-R thereof, and the collection chambers 15r are in the shape of cavities defined by openings not passing along said longitudinal axis L-L (from which the collected impurities enter). As illustrated in figure 3, the scraper 15 overall thus has a straight shape, unlike the prior art scrapers which are characterized by a "V" shape, with dimensions of the collection garages 15r that are suitably increased with respect to the known solutions. This constructive choice may depend on the particular applications and on the particular needs and is in no way limiting of the scope of the present invention.

Each collection chamber 15r comprises an outlet opening (reference number 15op) configured to allow the outflow of the impurities along said longitudinal axis L-L, and thus differently from the known solutions in which the discharge of the impurities occurs along the rotation axis.

Moreover, it is noted that the above configuration of the scraper 15 is a general feature of the filtration system 100 and is independent of the structure of the body 10 of said filtration system 100 and/or of the other components.

More particularly, the filtration system 100 is configured so that, during the rotation of the scraper 15, its outlet opening 15op may be in fluid communication with the discharge opening 20op for a certain period of time, so as to allow discharging the impurities collected and contained in the collection chambers 15r in the most suitable way. In a preferred embodiment, the dimensions of the outlet openings 15op of the scraper 15 and of the discharge opening 20op are coincident with each other.

In other words, the scraper 15, which collects the contamination found on the filter 13, comprises two collection chambers 15r which, in a preferred embodiment, are not connected to each other and which are increased with respect to the known solutions (for instance with a diameter of 60 mm) to couple in the most suitable way to the discharge opening 20op and thus to expel the collected contamination.

The rotation of the scraper 15 may be controlled by a suitable control unit (generically indicated with reference C), which is suitably programmed to adjust and time the operation of said scraper 15 and its coupling with the discharge system 20, as it is programmed to control the opening/closing of the valve 20v. It is noted that, in the scope of the present invention, the term "control unit" is meant in a broad sense and may represent any electronic system programmed by means of suitable programs, without limiting to a specific hardware/ software architecture, as well as it is possible to provide for any mechanical, active or passive, configuration without limiting to specific constructive shapes.

The control unit C may be configured to control the rotation of the scraper 15 and to open the valve 20v based on operational settings that are preset and decided by the user based on the needs and/or circumstances. For instance, the control unit C may be programmed to open the valve 20v after a certain rotation time of the scraper 15 or after a certain number of revolutions (generally based on a pre-established timing).

Furthermore, in an embodiment, based on a certain pressure measured on the surface of the filter 13 (i.e. when it is suitable to remove the impurities from the filter 13), the control unit C activates the rotation of the scraper 13 and, once the impurities have been removed (as previously seen after a certain time and/or a certain number of revolutions of the scraper), the outlet opening 15op of said scraper 15 is brought at and coupled to the discharge outlet 20op of the discharge system 20. Alternatively, it is possible to envisage a case in which the scraper 15 continues rotating and the opening of the valve 20v (and thus the control of the scraper 15 as well, so that its outlet opening 15op is in communication with the discharge opening 20op) is suitably timed.

In any case, once the valve 20v has been opened, the impurities stored in the collection chamber 15r of the scraper 15 are pushed outward through the discharge outlet 20op by the pressure inside the filtering chamber 10; the adopted configuration ensures that said impurities are easily pushed toward the discharge opening 20op, thus promoting the cleaning operation of the filter 13.

In a preferred embodiment of the present invention, there is only a single discharge opening 20op and two collection chambers 15r, so that said collection chambers 15r are discharged one at a time after half rotation of the scraper 15.

In conclusion, to sum up, the present invention allows brilliantly overcoming the technical problem by providing the aforementioned filtration system and solving the prior art drawbacks.

Advantageously according to the present invention, thanks to the new configuration adopted, which provides for a radial discharge outlet, arranged radially (and thus along the diameter of the hollow body), the discharge operation of the impurities accumulated on the surface of the filter is promoted.

For instance, in a preferred and not binding embodiment, one collection chamber is discharged at a time (said chambers moreover having a new constructive shape), where the implemented geometry promotes the discharge compared to the known solutions: the impurities are much more facilitated in their path toward the discharge than the known solutions, since there are no longer two masses of material to be expelled coming simultaneously from two communicating chambers toward a common duct (as in the known solutions), but each chamber singularly allows a linear discharge path, directly from the collection chamber toward the discharge opening, which is directly formed on the hollow body. Indeed, once the valve has been opened and the scraper is brought at said valve, the dirt, pushed by the inner pressure, has only one possible discharge direction, which is substantially straight, conversely to the known solutions in which the scraper is "V"-shaped and the discharge is at the vertex of the V; therefore, all this facilitates the unloading process.

In particular, the adopted solution allows a much more effective discharge of the peripheral areas of the filter, i.e. of the areas with greater accumulation of contamination, precisely thanks to the fact that the discharge through-opening is formed on the side wall of the hollow body, i.e. radially.

Experimental studies carried out by the Applicant have shown that the time after which the filter must be removed from the hollow body for a deep cleaning thereof is much longer than with known solutions, thus increasing the operational time of the filtration system and therefore bringing a notable technical improvement.

Furthermore, the shape of the scraper has been modified with respect to the known solutions, said change allowing achieving the above-described solution, i.e. the radial discharge; the scraper has a more regular shape (with a pair of cylindrical chambers) and openings with greater dimensions.

## Claims

1. A filtration system (100) for plastic materials, comprising:
- a hollow body (10) comprising a side wall (12), at least one inlet (10in) for a molten plastic material to be filtered and at least one outlet (10out) for the outflow of the filtered molten plastic material;
- a filtering element (13) arranged in the hollow body (10) between the inlet (10in) and the outlet (10out) and surrounded by the side wall (12), said filtering element (13) being configured to be passed through by the molten plastic material along a filtering direction (Dir), thus filtering impurities from said molten plastic material;
- at least one scraper (15) configured to rotate at a surface of the filtering element (13) about a rotation axis (R-R) and to collect the impurities accumulated on said surface of said filtering element (13), wherein the scraper (15) extends along a longitudinal axis (L-L) that is substantially orthogonal to the rotation axis (R-R); and
- a discharge system (20) adapted to allow the outflow of the impurities collected by the scraper (15),
wherein the discharge system (20) comprises at least one discharge through-opening (20op) formed on the side wall (12) of the hollow body (10),
wherein the scraper (15) comprises a body (15') having at least one scraping portion (15p) and at least one collection chamber (15r) in the shape of a cavity in said body (15') and configured to store the impurities collected during the rotation and conveyed thereinto by the scraping portion (15p), and
wherein the filtration system (100) is configured so that, during the rotation of the scraper (15), an outlet opening (15op) thereof is in direct fluid communication with the discharge opening (20op) only for a certain period of time to allow discharging the impurities collected and contained in the at least one collection chamber (15r),
**characterized in that** said outlet opening (15op) of the scraper (15) is located at an end portion thereof which is furthest away from the rotation axis (R-R) and is configured to allow the outflow of the impurities along said longitudinal axis (L-L).

2. The filtration system (100) according to claim 1, wherein the scraper (15) comprises at least one pair of collection chambers (15r) that are separated and arranged orthogonally with respect to the rotation axis (R-R) of said scraper (15).

3. The filtration system (100) according to any one of the preceding claims, wherein the at least one collection chamber (15r) of the scraper (15) has a diameter, meant as maximum transversal dimension, not greater than 100 mm, preferably comprised between 50 mm and 70 mm, still more preferably 60 mm.

4. The filtration system (100) according to any one of the preceding claims, wherein the discharge system (20) comprises at least one valve system (20v) arranged at the discharge opening (20op) and configured to adjust the outflow of the impurities from said discharge opening (20op).

5. The filtration system (100) according to claim 4, wherein the valve system (20v) is configured so as to allow, when impurities are expelled through the discharge opening (20op), a discharge in a direction that is substantially coincident with that of the discharge opening (20op) and/or in a direction that is substantially orthogonal thereto.

6. The filtration system (100) according to claim 4 or 5, wherein the valve system (20v) comprises a valve body (20v') and a movable element (20vm) inside said valve body (20v') and configured to open and close the discharge opening (20op).

7. The filtration system (100) according to any one of claims 4 to 6, comprising a control unit (C) configured to control the rotation of the scraper (15) and to open the valve system (20v) based on a certain rotation time of the scraper (15) or a certain number of revolutions of said scraper (15).

8. The filtration system (100) according to any one of the preceding claims, wherein the filtering element (13) comprises a disc comprising a plurality of filtering holes (13o), for instance with a diameter of 50 µm to 500 µm.

9. The filtration system (100) according to any one of the preceding claims, wherein the hollow body (10) extends along a symmetry axis (H-H) and wherein said discharge opening (20op) extends at least along a diameter (Y-Y) of said hollow body (10), said diameter being along a direction orthogonal to said symmetry axis (H-H).

10. The filtration system (100) according to claim 9, wherein the hollow body (10) is cylindrical-shaped and the discharge opening (20op) is arranged in a radial direction with respect to the symmetry axis (H-H) of said cylindrical-shaped hollow body (10).

11. The filtration system (100) according to any one of the preceding claims, wherein the inlet (10in) and the outlet (10out) of the molten plastic material are formed on the side wall (12) of the hollow body (10).

12. The filtration system (100) according to any one of the preceding claims, wherein the hollow body (10) comprises:
- a bottom wall (11), wherein the side wall (12) extends from said bottom wall (11); and
- a mouth (10o) opposite the bottom wall (11) and associable with a closing cover.

## Patentansprüche

1. Filtersystem (100) für Kunststoffmaterialien, umfassend:
- einen Hohlkörper (10), der eine Seitenwand (12) aufweist, mindestens einen Einlass (10in) für ein zu filtrierendes geschmolzenes Kunststoffmaterial und mindestens einen Auslass (10out) für den Abfluss des filtrierten geschmolzenen Kunststoffmaterials;
- ein Filterelement (13), das in dem Hohlkörper (10) zwischen dem Einlass (10in) und dem Auslass (10out) angeordnet und von der Seitenwand (12) umgeben ist, wobei das Filterelement (13) dazu ausgelegt ist, von dem geschmolzenen Kunststoffmaterial entlang einer Filterrichtung (Dir) durchströmt zu werden, wodurch Verunreinigungen aus dem geschmolzenen Kunststoffmaterial herausgefiltert werden;
- mindestens einen Abstreifer (15), der dazu ausgelegt ist, an einer Oberfläche des Filterelements (13) um eine Rotationsachse (R-R) zu rotieren und die auf der Oberfläche des Filterelements (13) angesammelten Verunreinigungen zu sammeln, wobei sich der Abstreifer (15) entlang einer Längsachse (L-L) erstreckt, die im Wesentlichen orthogonal zur Rotationsachse (R-R) ist; und
- ein Austragssystem (20), das dazu ausgelegt ist, den Austrag der vom Abstreifer (15) gesammelten Verunreinigungen zu ermöglichen,
wobei das Austragssystem (20) mindestens eine Austragsdurchgangsöffnung (20op) umfasst, die in der Seitenwand (12) des Hohlkörpers (10) ausgebildet ist,
wobei der Abstreifer (15) einen Körper (15') mit mindestens einem Abstreifabschnitt (15p) und mindestens einer Sammelkammer (15r) in Form einer Kavität in dem Körper (15') aufweist, die dazu ausgelegt ist, während der Rotation gesammelte und durch den Abstreifabschnitt (15p) dorthin geförderte Verunreinigungen aufzunehmen, und
wobei das Filtersystem (100) derart ausgelegt ist, dass während der Rotation des Abstreifers (15) eine Auslassöffnung (15op) desselben nur für einen bestimmten Zeitraum in direkter fluidischer Verbindung mit der Austragsöffnung (20op) steht, um den Austrag der in der mindestens einen Sammelkammer (15r) gesammelten und enthaltenen Verunreinigungen zu ermöglichen,
**dadurch gekennzeichnet, dass** die Auslassöffnung (15op) des Abstreifers (15) an einem Endabschnitt desselben angeordnet ist, der am weitesten von der Rotationsachse (R-R) entfernt ist, und dazu ausgelegt ist, den Austrag der Verunreinigungen entlang der Längsachse (L-L) zu ermöglichen.

2. Filtersystem (100) nach Anspruch 1,
**dadurch gekennzeichnet, dass** der Abstreifer (15) mindestens ein Paar von Sammelkammern (15r) umfasst, die voneinander getrennt und orthogonal zur Rotationsachse (R-R) des Abstreifers (15) angeordnet sind.

3. Filtersystem (100) nach einem der vorhergehenden Ansprüche,
**dadurch gekennzeichnet, dass** die mindestens eine Sammelkammer (15r) des Abstreifers (15) einen Durchmesser, verstanden als maximale Querschnittsabmessung, von höchstens 100 mm, vorzugsweise zwischen 50 mm und 70 mm, noch bevorzugter 60 mm, aufweist.

4. Filtersystem (100) nach einem der vorhergehenden Ansprüche,
**dadurch gekennzeichnet, dass** das Austragssystem (20) mindestens ein Ventilsystem (20v) umfasst, das an der Austragsöffnung (20op) angeordnet ist und dazu ausgelegt ist, den Austrag der Verunreinigungen aus der Austragsöffnung (20op) zu steuern.

5. Filtersystem (100) nach Anspruch 4,
**dadurch gekennzeichnet, dass** das Ventilsystem (20v) derart ausgelegt ist, dass es beim Austrag der Verunreinigungen durch die Austragsöffnung (20op) einen Austrag in einer Richtung ermöglicht, die im Wesentlichen mit derjenigen der Austragsöffnung (20op) zusammenfällt, und/oder in einer Richtung, die dazu im Wesentlichen orthogonal ist.

6. Filtersystem (100) nach Anspruch 4 oder 5,
**dadurch gekennzeichnet, dass** das Ventilsystem (20v) einen Ventilkörper (20v') und ein bewegliches Element (20vm) innerhalb des Ventilkörpers (20v') umfasst, das dazu ausgelegt ist, die Austragsöffnung (20op) zu öffnen und zu schließen.

7. Filtersystem (100) nach einem der Ansprüche 4 bis 6,
**dadurch gekennzeichnet, dass** es eine Steuereinheit (C) umfasst, die dazu ausgelegt ist, die Rotation des Abstreifers (15) zu steuern und das Ventilsystem (20v) auf der Grundlage einer bestimmten Rotationszeit des Abstreifers (15) oder einer bestimmten Anzahl von Umdrehungen des Abstreifers (15) zu öffnen.

8. Filtersystem (100) nach einem der vorhergehenden Ansprüche,
**dadurch gekennzeichnet, dass** das Filterelement (13) eine Scheibe mit einer Vielzahl von Filteröffnungen (13o) umfasst, beispielsweise mit einem Durchmesser von 50 µm bis 500 µm.

9. Filtersystem (100) nach einem der vorhergehenden Ansprüche,
**dadurch gekennzeichnet, dass** sich der Hohlkörper (10) entlang einer Symmetrieachse (H-H) erstreckt und dass sich die Austragsöffnung (20op) mindestens entlang eines Durchmessers (Y-Y) des Hohlkörpers (10) erstreckt, wobei sich dieser Durchmesser entlang einer Richtung erstreckt, die orthogonal zur Symmetrieachse (H-H) ist.

10. Filtersystem (100) nach Anspruch 9,
**dadurch gekennzeichnet, dass** der Hohlkörper (10) zylindrisch ausgebildet ist und die Austragsöffnung (20op) in radialer Richtung in Bezug auf die Symmetrieachse (H-H) des zylindrischen Hohlkörpers (10) angeordnet ist.

11. Filtersystem (100) nach einem der vorhergehenden Ansprüche,
**dadurch gekennzeichnet, dass** der Einlass (10in) und der Auslass (10out) für das geschmolzene Kunststoffmaterial in der Seitenwand (12) des Hohlkörpers (10) ausgebildet sind.

12. Filtersystem (100) nach einem der vorhergehenden Ansprüche,
**dadurch gekennzeichnet, dass** der Hohlkörper (10) umfasst:
- eine Bodenwand (11), von der sich die Seitenwand (12) erstreckt; und
- eine der Bodenwand (11) gegenüberliegende Öffnung (10o), die mit einer Abdeckung verbindbar ist.

## Revendications

1. Système de filtration (100) pour matières plastiques, comprenant:
- un corps creux (10) comprenant une paroi latérale (12), au moins une entrée (10in) pour une matière plastique fondue à filtrer et au moins une sortie (10out) pour l'écoulement de la matière plastique fondue filtrée;
- un élément filtrant (13) disposé dans le corps creux (10) entre l'entrée (10in) et la sortie (10out) et entouré par la paroi latérale (12), ledit élément filtrant (13) étant configuré pour être traversé par la matière plastique fondue dans une direction de filtration (Dir), filtrant ainsi des impuretés de ladite matière plastique fondue;
- au moins un racleur (15) configuré pour tourner au niveau d'une surface de l'élément filtrant (13) autour d'un axe de rotation (R-R) et pour collecter les impuretés accumulées sur ladite surface dudit élément filtrant (13), le racleur (15) s'étendant selon un axe longitudinal (L-L) qui est sensiblement orthogonal à l'axe de rotation (R-R); et
- un système d'évacuation (20) adapté pour permettre l'écoulement des impuretés collectées par le racleur (15),
dans lequel le système d'évacuation (20) comprend au moins une ouverture traversante d'évacuation (20op) formée sur la paroi latérale (12) du corps creux (10),
dans lequel le racleur (15) comprend un corps (15') ayant au moins une portion de raclage (15p) et au moins une chambre de collecte (15r) en forme d'une cavité dans ledit corps (15') et configurée pour stocker les impuretés collectées pendant la rotation et acheminées dans celle-ci par la portion de raclage (15p), et
dans lequel le système de filtration (100) est configuré de telle sorte que, pendant la rotation du racleur (15), une ouverture de sortie (15op) de celui-ci ne soit en communication fluidique directe avec l'ouverture d'évacuation (20op) que pour une certaine période de temps pour permettre l'évacuation des impuretés collectées et contenues dans l'au moins une chambre de collecte (15r),
**caractérisé en ce que** ladite ouverture de sortie (15op) du racleur (15) est située au niveau d'une portion d'extrémité de celui-ci qui est la plus éloignée de l'axe de rotation (R-R) et est configurée pour permettre l'écoulement des impuretés selon ledit axe longitudinal (L-L).

2. Système de filtration (100) selon la revendication 1, dans lequel le racleur (15) comprend au moins une paire de chambres de collecte (15r) qui sont séparées et disposées orthogonalement par rapport à l'axe de rotation (R-R) dudit racleur (15).

3. Système de filtration (100) selon l'une quelconque des revendications précédentes, dans lequel l'au moins une chambre de collecte (15r) du racleur (15) a un diamètre, conçu comme dimension transversale maximale, ne dépassant pas 100 mm, préférablement compris entre 50 mm et 70 mm, encore plus préférablement 60 mm.

4. Système de filtration (100) selon l'une quelconque des revendications précédentes, dans lequel le système d'évacuation (20) comprend au moins un système de vanne (20v) disposé au niveau de l'ouverture d'évacuation (20op) et configuré pour régler l'écoulement des impuretés de ladite ouverture d'évacuation (20op).

5. Système de filtration (100) selon la revendication 4, dans lequel le système de vanne (20v) est configuré de manière à permettre, lorsque les impuretés sont expulsées à travers l'ouverture d'évacuation (20op), une évacuation dans une direction sensiblement coïncidant avec celle de l'ouverture d'évacuation (20op) et/ou dans une direction qui est sensiblement orthogonal à celle-ci.

6. Système de filtration (100) selon la revendication 4 ou 5, dans lequel le système de vanne (20v) comprend un corps de vanne (20v') et un élément mobile (20vm) à l'intérieur dudit corps de vanne (20v') et configuré pour ouvrir et fermer l'ouverture d'évacuation (20op).

7. Système de filtration (100) selon l'une quelconque des revendications 4 à 6, comprenant une unité de commande (C) configurée pour commander la rotation du racleur (15) et pour ouvrir le système de vanne (20v) sur la base d'un certain temps de rotation du racleur (15) ou d'un certain nombre de tours dudit racleur (15).

8. Système de filtration (100) selon l'une quelconque des revendications précédentes, dans lequel l'élément filtrant (13) comprend un disque comprenant une pluralité de trous filtrants (13o), par exemple avec un diamètre de 50 µm à 500 µm.

9. Système de filtration (100) selon l'une quelconque des revendications précédentes, dans lequel le corps creux (10) s'étend selon un axe de symétrie (H-H) et dans lequel ladite ouverture d'évacuation (20op) s'étend au moins selon un diamètre (Y-Y) dudit corps creux (10), ledit diamètre étant dans une direction orthogonale audit axe de symétrie (H-H).

10. Système de filtration (100) selon la revendication 9, dans lequel le corps creux (10) a une forme cylindrique et l'ouverture d'évacuation (20op) est disposée dans une direction radiale par rapport à l'axe de symétrie (H-H) dudit corps creux (10) de forme cylindrique.

11. Système de filtration (100) selon l'une quelconque des revendications précédentes, dans lequel l'entrée (10in) et la sortie (10out) de la matière plastique fondue sont formées sur la paroi latérale (12) du corps creux (10).

12. Système de filtration (100) selon l'une quelconque des revendications précédentes, dans lequel le corps creux (10) comprend:
- une paroi de fond (11), dans lequel la paroi latérale (12) s'étend de ladite paroi de fond (11); et
- un orifice (100) à l'opposé de la paroi de fond (11) et associable avec un couvercle de fermeture.
